# EUROPEAN PATENT SPECIFICATION

(11) **EP 3 159 078 B1**
(45) Date of publication and mention of the grant of the patent: **16.10.2019**
(21) Application number: 15809922.6
(22) Date of filing: 17.06.2015
(51) Int. Cl.: B22F 1/00, B22F 9/18, B82B 3/00, B22F 9/24, H01B 1/02, B22F 1/02, C09D 5/24, C09D 7/40, C09D 7/61

(54) **METHOD OF PREPARING A SILVER-COATED COPPER NANOWIRE**
HERSTELLUNGSVERFAHREN FÜR EIN SILBERBESCHICHTETER KUPFERNANODRAHT
PROCÉDÉ DE PRÉPARATION D'UN NANOFIL DE CUIVRE RECOUVERT D'ARGENT

(30) Priority: 19.06.2014 KR 20140075212
(43) Date of publication of application: 26.04.2017
(73) Proprietor: Bioneer Corporation, Daejeon 306-220 (KR)
(72) Inventor: PARK, Han Oh, Daejeon 305-761 (KR); KIM, Jae Ha, Daejeon 305-301 (KR); LEE, Soo No, Daejeon 305-728 (KR); YUN, Kug Jin, Daejeon 302-838 (KR)
(74) Representative: Adam, Holger
(86) International application number: PCT/KR2015/006133
(87) International publication number: WO 2015/194850

(56) References cited:
- WO-A1-2012/060776
- WO-A1-2013/137018
- WO-A1-2013/137018
- KR-A- 20100 085 215
- KR-A- 20120 115 298
- KR-A- 20130 064 868
- XIAOXIONG LUO ET AL: "Silver-coated copper nanowires with improved anti-oxidation property as conductive fillers in low-density polyethylene", CANADIAN JOURNAL OF CHEMICAL ENGINEERING, vol. 91, no. 4, 24 May 2012 (2012-05-24), pages 630-637, XP055443879, US, CA ISSN: 0008-4034, DOI: 10.1002/cjce.21701

## Description

### TECHNICAL FIELD

The present invention relates to a silver-coated copper nanowire and a preparation method therefor, and more specifically, to a preparation method for a silver-coated copper nanowire including synthesizing a copper nanowire through a chemical method using piperazine (C₄H₁₀N₂) and/or hexamethylenediamine (C₆H₁₆N₂), which are novel copper capping agents, and then coating the copper nanowire with silver by using a chemical plating method in order to prevent oxidation of the copper nanowire.

### BACKGROUND ART

Nanowires are nano materials having a nanometer-sized diameter and a length of several hundreds of nanometers to several hundreds of micrometers, and have received much attention as a core material to be used in manufacturing next-generation nano devices since it is easy to be artificially manipulated. Recently, due to properties such as conductivity and transparency, etc., metal nanowires such as copper, silver, nickel, etc., have been effectively used as a substitute for conventional conductive materials such as indium tin oxide (ITO), conductive polymers, carbon nanotubes, graphene, etc.

Among them, a copper nanowire has advantages such as high conductivity, flexibility, transparency and low price, etc., to be highlighted as a substitute for indium tin oxide (ITO) that has been mainly used for displays. In particular, the copper nanowire is usable for a wide variety of applications including low emissivity windows, touch-sensitive modulation panels, solar cells, and electromagnetic wave shielding materials since it is characterized by a transparent conductor.

Conventionally, the copper nanowire has been manufactured by methods such as electrochemical reaction, chemical vapor deposition, a hard-template assisted method, a colloid and hydrothermal process, etc. However, the conventional manufacturing method has problems such as high facility investment cost of equipment, difficulty in controlling a size of the nanowire, and low productivity, etc.

Recently, a preparation method for a copper nanowire by a chemical synthesis method has been known. Korean Patent Publication No. 1073808 discloses a preparation method for a copper nanowire including adding and mixing an amine ligand, a reducing agent, a surfactant, and a nonpolar organic solvent with an aqueous solution of CuCl₂, and transferring the reaction solution to a high-pressure reactor, followed by reaction at 80 to 200°C for 24 hours. The copper nanowire prepared by the method has a length of 10 to 50 µm and a diameter of 200 to 1000 nm. However, since this preparation method uses the high-pressure reactor, there are problems in that cost for preparation is increased and mass production is difficult to be performed.

Korean Patent Publication No. 1334601 discloses a preparation method for a copper nanowire by a polyol process using ethylene glycol (EG) and polyvinyl pyrrolidone (PVP), etc. However, the preparation method causes an environmental problem in that a toxic solvent is used as compared with a case where an aqueous solution is used as a solvent, and economic feasibility is deteriorated due to an increase in preparation cost.

International Patent Application Publication No. 2011-071885 discloses a preparation method for a copper nanowire including mixing a copper ion precursor, a reducing agent, a copper capping agent, and a pH controlling material, followed by reaction at a predetermined temperature to prepare the copper nanoparticle including a copper stick attached to a spherical copper nanoparticle and having a length of 1 to 500 µm and a diameter of about 20 to 300 nm. However, the preparation method still has problems in that productivity or quality uniformity of the prepared copper nanowire is low, etc.

On the other hand, when the copper nanowire is exposed to air for a long time, oxidation phenomenon occurs and copper oxide is formed. This oxidation phenomenon progresses more rapidly as a temperature increases. This copper oxide has significantly lower electrical conductivity than that of pure copper. In order to prevent the formation of the copper oxide, International Patent Application Publication No. 2011-071885 and Korean Patent Publication No. 1334601 disclose a method for preparing a copper nanowire, and then, coating a surface of the copper nanowire with metals such as nickel, gold, tin, zinc, silver, platinum, titanium, aluminum, tungsten, cobalt, etc.

Moreover, WO 2013/137018 A1 discloses a metal nanonetwork, characterized in that metal nanostructures are joined by metal bonds and the metal nanostructures are metal nanowires. Moreover, Luo et al., Canadian Journal of Chemical Engineering (2013), 91(4), 630-637 discloses silver-coated copper nanowires prepared by chemical plating method with copper nanowires and Ag-amine reagent, which exhibit improved anti-oxidation behavior.

However, there is still a need to improve an overall process efficiency, uniformity in quality of the copper nanowire, etc.

Therefore, the present inventors made an effort to solve the problems and found that a copper nanowire was chemically synthesized using a new copper capping agent, and then, a surface thereof was coated with silver by a chemical plating method to prevent oxidation, and thus, a copper nanowire having high resistance to oxidation could be prepared with high economic feasibility and productivity as compared with conventional copper nanowires, and completed the present invention.

### DISCLOSURE OF INVENTION

An object of the present invention is to provide a novel preparation method for a silver-coated copper nanowire with strong resistance to oxidation so as to have high economic feasibility and productivity, and that object is solved by the method according to claim 1.

### BRIEF DESCRIPTION OF THE DRAWINGS

FIG. 1 shows a scanning electron microscope (SEM) image of a copper nanowire prepared in Example 1.
FIG. 2 shows a scanning electron microscope-energy dispersive spectroscopy (SEM-EDS) image and a content analysis of the copper nanowire prepared in Example 1.
FIG. 3 shows a scanning electron microscope (SEM) image of a silver-coated copper nanowire prepared in Example 2.
FIG. 4 shows a scanning electron microscope-energy dispersive spectroscopy (SEM-EDS) image and a content analysis of the silver-coated copper nanowire prepared in Example 2.
FIG. 5 shows a scanning electron microscope (SEM) image of a copper nanowire prepared in Example 3.
FIG. 6 shows a scanning electron microscope-energy dispersive spectroscopy (SEM-EDS) image and a content analysis of the copper nanowire prepared in Example 3.
FIG. 7 shows X-ray diffraction (XRD) patterns of the copper nanowire prepared in Example 3.
FIG. 8 shows a scanning electron microscope (SEM) image of a silver-coated copper nanowire prepared in Example 4.
FIG. 9 shows a scanning electron microscope-energy dispersive spectroscopy (SEM-EDS) image and a content analysis of the silver-coated copper nanowire prepared in Example 4.
FIG. 10 shows X-ray diffraction (XRD) patterns of the silver-coated copper nanowire prepared in Example 4.
FIG. 11 shows changes in sheet resistance when the silver-coated copper nanowire prepared in Example 2 and the copper nanowire prepared in Example 1 were allowed to stand under atmosphere for 2 days. In FIG. 11, (a) shows the sheet resistance of the silver-coated copper nanowire of Example 2, and (b) shows the sheet resistance of the copper nanowire of Example 1.
FIG. 12 shows thermogravimetric analysis of the silver-coated copper nanowire prepared in Example 2 and the copper nanowire prepared in Example 1.

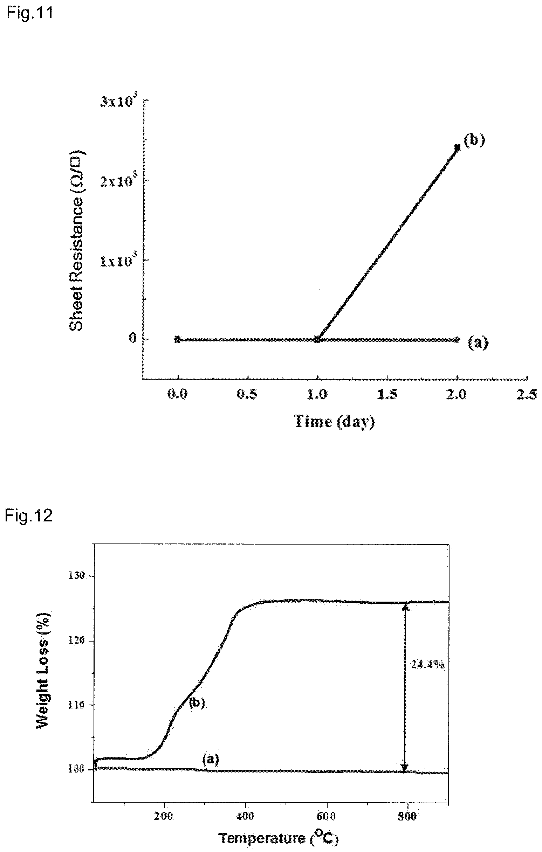

   In FIG. 12, (a) shows thermogravimetric analysis results of the silver-coated copper nanowire prepared in Example 2.
   In FIG. 12, (b) shows thermogravimetric analysis results of the copper nanowire prepared in Example 1.

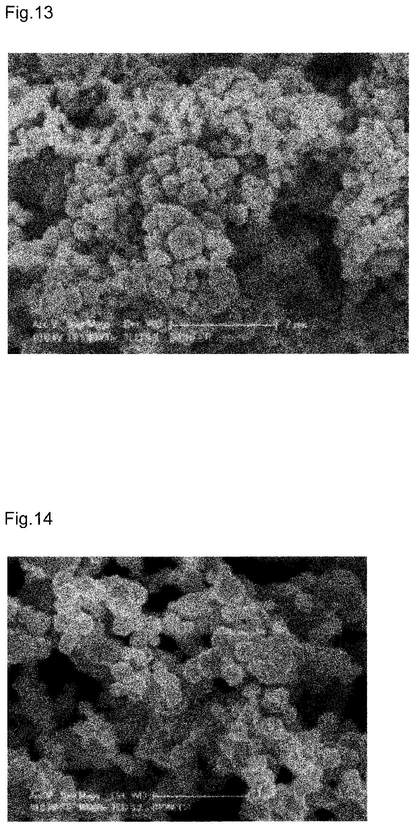

FIG. 13 shows a scanning electron microscope (SEM) image of a copper nanowire prepared by Comparative Example 1.
FIG. 14 shows a scanning electron microscope (SEM) image of a copper nanowire prepared by Comparative Example 2.

### BEST MODE FOR CARRYING OUT THE INVENTION

Unless defined otherwise, all the technical and scientific terms used herein have the same meanings as those generally understood by persons skilled in the art to which the present invention pertains. Generally, the nomenclature used herein are well known and commonly employed in the art.

In the present invention, a copper nanowire was prepared using piperazine and/or hexamethylenediamine as a capping agent, and then, coated with silver by a chemical method to prepare a silver-coated copper nanowire having excellent physical properties.

Specifically, the present invention provides a method of preparing silver-coated copper nanowire comprising:
a. stirring an aqueous solution in which ① sodium hydroxide, ② a copper compound, and at least one material selected from ③ piperazine (C₄H₁₀N₂) and hexamethylenediamine (C₆H₁₆N₂) are added into water to have a concentration of 0.008 to 2.0 M;
b. preparing a copper nanowire by adding a reducing agent to the aqueous solution and reducing copper ions to have a concentration of 0.01 to 1.0M at temperature of 40 to 100°C;
c. washing and drying the copper nanowire prepared in the step (b); and
d. coating a silver on the copper nanowire dried in the step (c),
wherein the silver-coated copper nanowire has a length of 5 to 10 µm and a diameter of 200 to 300 nm.

In the present invention, it is preferred that the sodium hydroxide in step (a) is added to have a concentration of 2.5 to 25 M (mole/L). The sodium hydroxide serves to maintain a solution of reducing the copper ions to copper to be alkaline. When the concentration of the sodium hydroxide is 2.5 M or less, the solution does not maintain alkalinity, such that the reduction reaction of the copper ions does not occur properly. When the concentration of the sodium hydroxide is 25 M or more, the sodium hydroxide reacts with copper, such that the nanowire is not formed as desired.

In the present invention, the copper compound is preferably at least one compound selected from copper nitrate, copper sulfate, copper sulfite, copper acetate, copper chloride, copper bromide, copper iodide, copper phosphate or copper carbonate, and preferably copper nitrate, but is not limited thereto. The copper compound supplies the copper ions to provide copper required for growing the copper nanowire.

In the present invention, it is preferred that the copper compound is added to have a concentration of 0.004 to 0.5 M based on the copper ions. When the copper ions have a concentration of 0.004 M or less, the copper nanowire may not be properly formed, but rather, copper nanoparticles may be formed. When the copper ions have a concentration of 0.5 M or more, the copper ions are present in an excessive amount in the solution, and thus, a reaction with the reducing agent is not completely generated.

In the present invention, the ③ piperazine (C₄H₁₀N₂) and/or hexamethylenediamine (C₆H₁₆N₂) perform(s) a function of a copper capping agent. In order for the copper ions contained in the copper compound to be prepared as the nanowire, a shape of the copper nanowire is required to be controlled by amine groups contained in the copper capping agent. The copper capping agent is coupled to a copper nanostructure, and allows the copper to grow in a longitudinal direction to have a nanowire shape. It is preferred that the copper capping agent in the present invention is the piperazine (C₄H₁₀N₂) and/or the hexamethylenediamine (C₆H₁₆N₂). The piperazine (C₄H₁₀N₂) [Formula 1] and the hexamethylenediamine (C₆H₁₆N₂) [Formula 2] have the following structures:

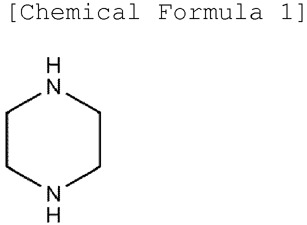

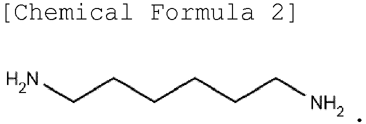

In the present invention, the sum of molar concentrations of the ③ piperazine and/or the hexamethylenediamine is 0.008 to 2.0 M. When the concentration of the piperazine or the hexamethylenediamine which is the copper capping agent is 0.008M or less, not only the copper nanowire but also a copper disk-shaped structure may be formed. When the concentration of the piperazine or the hexamethylenediamine is 2.0 M or more, the copper may be formed in a disk shape.

In the present invention, the stirring in step (a) may be performed so that all of the materials added to the aqueous solution are capable of being dissolved well, and may be performed using a conventional stirrer. A rate for the stirring is preferably 200 to 400 rpm, and a time for the stirring is preferably 5 to 30 minutes, but the rate and the time are not limited thereto.

In the present invention, the reducing agent in step (b) may be at least one material selected from hydrazine, ascorbic acid, L(+)-ascorbic acid, isoascorbic acid, ascorbic acid derivative, oxalic acid, formic acid, phosphite, phosphoric acid, sulfite or sodium borohydride, and preferably, hydrazine, but is not limited thereto.

The Chemical Formula in which the hydrazine reduces the copper ions to copper under alkaline solution conditions is shown as follow:

[Equation 1] 2Cu²⁺ + N₂H₄ + 4OH⁻ → 2Cu + N₂ + 4H₂O

In the present invention, the reducing agent in step (b) has a concentration of 0.01 to 1.0 M, and an addition rate is preferably 0.1 to 5 ml/min. When the concentration of the reducing agent is 0.01 M or less or 1.0 M or more, or when the reducing agent is added at a rate of 0.1 ml/min or less or 5 ml/min or more, there is a risk that a copper nanoparticle form rather than the copper nanowire form may be formed. In step (b), after adding the reducing agent, stirring is performed for 30 minutes to 2 hours, and preferably for 1 hour to reduce the copper ions.

In addition, step (b) is performed at 40 to 100°C. When a reaction temperature at the time of the reduction is 40°C or less or 100°C or more, a copper reducing reaction is generated, but there is a possibility that the particles which are not the nanowire may be formed.

In the present invention, step (c) is a pre-step for silver coating after impurities on a surface of the copper nanowire prepared in step (b) are removed.

The step (c) is characterized by washing and drying using a material capable of removing the impurities on the surface of the copper nanowire, and particularly preferably, washing using a hydrazine solution.

When the copper nanowire is washed, it is preferred to wash the copper nanowire with an aqueous solution containing hydrazine to prevent oxidation in the air, and to dry the copper nanowire in a vacuum oven at room temperature for 12 to 30 hours. A concentration of the aqueous solution containing hydrazine is preferably 0.5 to 2 vol%.

In the present invention, step (d) is a step of forming silver coating (layer) for improving physical properties of the prepared copper nanowire.

Preferably, it is characterized that the copper nanowire washed and dried in step (c) is dispersed in an aqueous solution, and an ammonia-silver complex solution containing a silver capping agent is mixed with the dispersion solution, and stirred under a predetermined condition.

The ammonia-silver complex solution may be prepared by adding ammonia water to a silver nitrate solution to form an ammonia-silver complex solution, adding at least one silver capping agent selected from below thereto, followed by mixing.

In particular, in the preparation of the silver-coated copper nanowire according to the present invention, as the silver capping agent, a silver capping agent having an amine group is preferably added so that silver is uniformly coated on the copper nanowire.

The silver capping agent that is usable in the present invention is preferably at least one material selected from piperazine, hexamethylenediamine, ethylenediamine, triethylenediamine, propane-1,3-diamine, butane-1,4-diamine, pentane-1,5-diamine, N,N,N',N'-tetramethylethylenediamine, N,N-diethylethylenediamine, N,N,N'-trimethyl-1,3-propanediamine, N,N-dimethyl-N'-ethylethylenediamine, N-propyl-1,3-propanediamine, N2,N2-dimethyl-1,2-butanediamine, N-butylethylenediamine, N-isopropyl-1,3-propanediamine, polyethylglycol diamine, 1,3-cyclohexanediamine, N-methyl-N'-cyclopropyl ethylenediamine, N,N'-dimethylethylenediamine, N-ethylethylenediamine, N-methylethylenediamine, N,N'-dimethyl-1,6-hexenediamine, N,N,N',N'-tetramethyl-1,4-butanediamine, N-methyl-N'-cyclohexylethylenediamine, but is not limited thereto.

In order to disperse the copper nanowire in the aqueous solution, it is preferable to add 0.1 to 0.3 parts by weight of the copper nanowire based on 100 parts by weight of the aqueous solution, followed by ultrasonic treatment to disperse the copper nanowire. The ultrasonic treatment may be performed by a method commonly used in the art, and may be performed at a wavelength of 20 to 60 KHz for 5 to 30 minutes, but is not limited thereto.

The silver coating layer of the copper nanowire is formed, wherein a principle of the silver coating follows a chemical plating method.

Specifically, the ammonia-silver complex solution is prepared by adding ammonia water to the silver nitrate solution. The Chemical Formula of this reaction may be expressed as [Equation 2] below, and an ammonia-silver complex [Ag(NH₃)₂]+ is formed as shown in 3) of [Equation 2] :
[Equation 2]

1) 2AgNO₃+ 2NH₄OH → Ag₂O ↓ +H₂O + 2NH₄NO₃

2) Ag₂O + 4NH₄OH → 2[Ag(NH₃)₂]OH + 3H₂O

3) [Ag(NH₃)₂]OH + NH₄NO₃ → [Ag(NH₃)₂]NO₃ + NH₄OH.

The copper nanowire is coated with silver atoms by a chemical plating principle in which the [Ag(NH₃)₂]+ complex formed in 3) of [Equation 2] is reduced to Ag ions by electrons emitted from the copper of the copper nanowire. This Chemical Reaction Scheme is shown in [Equation 3].

[Equation 3] Cu + 2[Ag(NH₃)₂]NO₃ → [Cu(NH₃)₄](NO₃)₂ + 2Ag↓.

In the present invention, a concentration of silver nitrate in the ammonia-silver complex solution may be 0.006 to 0.06 M and the concentration of the ammonia water may be 0.01 to 0.3 M. When the concentration of the silver nitrate is 0.006 M or less or 0.06 M or more, or when the concentration of the ammonia water is 0.01 M or less or 0.3 M or more, it is difficult to form the complex.

Here, a concentration at which the silver capping agent is added is preferably 0.01 to 1 M. When the silver capping agent is added at 0.01 M or less or at 1 M or more, silver is not uniformly coated on the copper nanowire.

In another aspect of the present invention, the present invention relates to a silver-coated copper nanowire prepared by the preparation method of the present invention.

The silver-coated copper nanowire prepared by the preparation method of the present invention has a length of 5 to 10 µm, a diameter of 200 to 300 nm, and a silver content of 5 to 90 parts by weight based on 100 parts by weight of the total nanowire.

The silver-coated copper nanowire according to the present invention has more excellent oxidation stability and heat stability as compared to those of conventional copper nanowires, for example, copper nanowires that are not coated with silver, etc.

In the present invention, the silver content in the silver-coated copper nanowire may be 2 to 60 parts by weight based on 100 parts by weight of the total nanowire. When the silver content is less than 2 parts by weight based on the total weight, the copper nanowire is not entirely coated with silver. When the silver content is 60 parts by weight or more, silver that is not coated on the copper nanowire is present, such that there is possibility that silver particles separated from the copper nanowire may be generated.

In still another aspect, the present invention relates to an electromagnetic wave shielding paste or a high conductivity paste including a silver-coated copper nanowire prepared by the preparation method according to the present invention. The silver-coated copper nanowire according to the present invention is capable of maintaining a high electrical conductivity, which is possible to be prepared in forms of the electromagnetic wave shielding paste and the high conductivity paste that require high electrical conductivity. The paste may be prepared by further including an organic binder and an adhesive in addition to the silver-coated copper nanowire of the present invention.

### EXAMPLES

Hereinafter, the present invention will be described in more detail with reference to the following Examples. However, the following Examples are only for exemplifying the present invention.

Specifications of equipment used in Examples and methods for measuring physical properties are as follows.
① Measurement of shape and structure: The shape and the structure of the copper nanowire were measured using a scanning electron microscope (SEM; FEI, SIRION).
② Measurement of component: Components of the copper nanowire were measured using an energy dispersive spectroscopy (SEM-EDS; FEI, SIRION) mounted on the SEM (FEI, SIRION) and X-ray diffractometer (XRD; RIGAKU, D/MAX-2500).
③ Thermal analysis: A weight change depending on a change in temperature was measured using a thermogravimetric analyzer (TGA; NETZSCH, TG 209 F3).
④ Sheet resistance: The sheet resistance was measured with a four-point sheet resistance meter (Loresta-GP, MCP-T610, Mitsubishi Chemical Analytech).

### Example 1 Preparation of copper nanowire using piperazine (C₄H₁₀N₂)

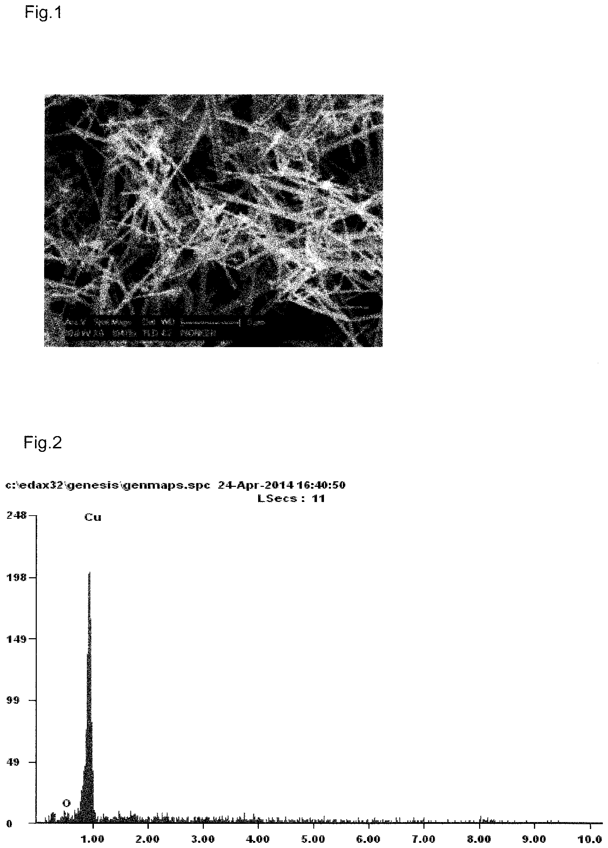

2000 ml of water (ultrapure water) was added to a 3000 ml round flask, and 1200 g (15 M) of sodium hydroxide (NaOH, Samchun Pure Chemical) was added while stirring in a stirrer. A temperature inside of the reactor heated by an exothermic reaction was cooled so as not to exceed 50°C, and then, 3.8 g (0.0079 M) of copper (II) nitrate (Cu(NO₃)₂·3H₂O, Samchun Pure Chemical) was dissolved in 100 ml of water (ultrapure water) and added into the reactor. Then, 9.7 g (0.268 M) of piperazine (C₄H₁₀N₂, Sigma Aldrich) was dissolved in 100 ml of water (ultrapure water), and added to the reactor, followed by stirring at an average stirring rate of 300 rpm for 10 minutes. A temperature of the reactor was raised to 70°C. Then, 4 ml of hydrazine (N₂H₄, Samchun Pure Chemical) was mixed with 240 ml (0.04 M) of water (ultrapure water), and then, added to the inside of the reactor using a syringe pump at a rate of 4 ml/min for 1 hour. A temperature of the reactor was maintained to be 70°C, and when the reaction was completed, the reactor was slowly cooled to room temperature. Then, the reaction product was washed with 1 vol% of hydrazine washing solution (2L) and dried in a vacuum oven (JEIO Tech, OV-12) at 25°C for 24 hours. The scanning electron microscope (SEM) of the prepared copper nanowire was reviewed, and as a result, it was confirmed that a copper nanowire having a length of 5 to 10 µm and a diameter of 200 to 300 nm was prepared as shown in FIG. 1. As shown in FIG. 2, the components and the content of the copper nanowire were analyzed by the scanning electron microscope-energy dispersive spectroscopy (SEM-EDS), and as a result, it was confirmed that unoxidized copper nanowire was prepared.

### Example 2: Silver-coating of copper nanowire using ethylenediamine

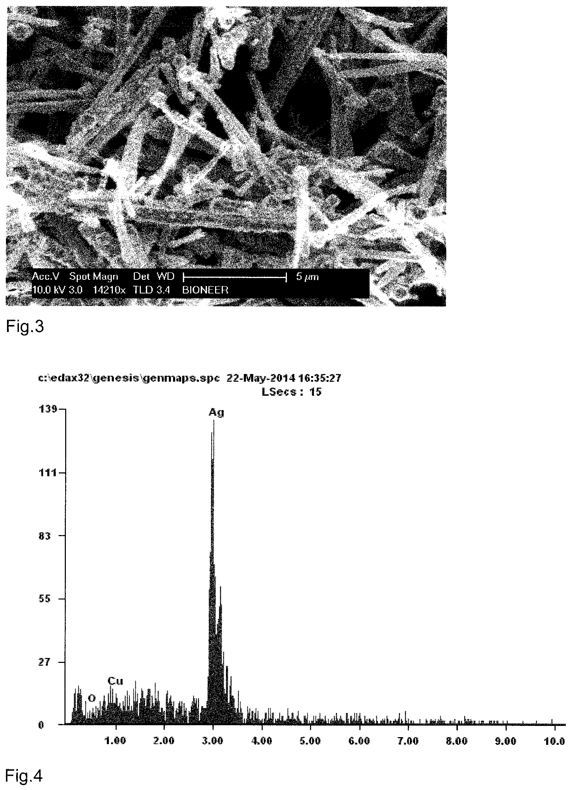

200 ml of water (ultrapure water) and 0.5 g of the copper nanowire prepared using piperazine were added to a 500 ml Erlenmeyer flask, and treated at 53 kHz for 10 minutes using an ultrasonic cleaner (Youngjin Corporation bath sonicator, SK7210HP) so as to disperse the copper nanowire. 0.3 g of silver nitrate (AgNO₃, JUNETECH) was added and dissolved in 200 ml (0.012 M) of water (ultrapure water) in another beaker, and 0.7 ml (0.036 M) of ammonia water (NH₄OH, Samchun Pure Chemical) was added to prepare a clear liquid, and 1 ml (0.083 M) of ethylenediamine (Sigma Aldrich) was added thereto and stirred well for 1 minute. A solution containing silver nitrate, ammonia water, and ethylenediamine was added thereto and stirred at room temperature for 1 hour while stirring the copper nanowire solution at a stirring rate of 300 rpm. When the reaction was completed, the reaction product was washed with 2 L of water (ultrapure water) using a filter paper and dried at room temperature for 24 hours to obtain a silver-coated copper nanowire. As shown in FIG. 3, it could be confirmed that the silver coating was formed on a surface of the copper nanowire by scanning electron microscope (SEM). In FIG. 4, analysis results of the SEM-EDS of the prepared silver-coated copper nanowire could be confirmed.

### Example 3: Preparation of copper nanowire using hexamethylenediamine (C₆H₁₆N₂)

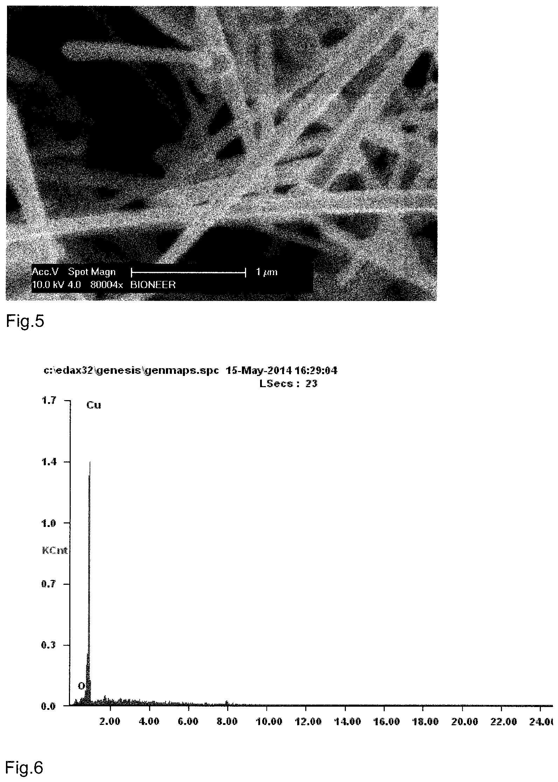

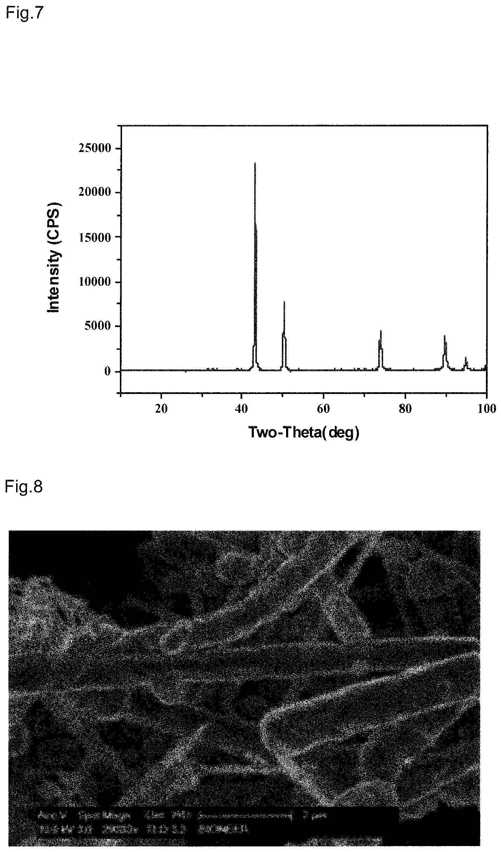

2000 ml of water (ultrapure water) was added to a 3000 ml round flask, and 1200 g of sodium hydroxide (NaOH, Samchun Pure Chemical) was added while stirring in a stirrer. A temperature inside of the reactor heated by an exothermic reaction was cooled so as not to exceed 50°C, and then, 3.8 g of copper (II) nitrate (Cu(NO₃)₂·3H₂O, Samchun Pure Chemical) was dissolved in 100 ml of water (ultrapure water) and added into the reactor. Then, 62.25 ml (0.268 M) of hexamethylenediamine (C₆H₁₆N₂, Sigma Aldrich) was added and stirred at 300 rpm for 10 minutes. When a temperature of the reactor was 35°C, 4 ml of hydrazine (N₂H₄, Samchun Pure Chemical) was mixed with 240 ml of water (ultrapure water), and then, added to the inside of the reactor using a syringe pump at a rate of 4 ml/min for 1 hour. A temperature of the inside of the reactor was raised to be 70°C, and the reaction was performed for 1 hour. When the reaction was completed, the reactor was slowly cooled to room temperature. Then, the reaction product was washed with 1 vol% of hydrazine washing solution (2L) and dried in a vacuum oven (JEIO Tech, OV-12) at 25°C for 24 hours. The scanning electron microscope (SEM) of the prepared copper nanowire was reviewed, and as a result, it was confirmed that a copper nanowire having a length of 2 to 5 µm and a diameter of 200 to 300 nm was prepared as shown in FIG. 5. As shown in FIG. 6, the components and the content of the copper nanowire were analyzed by the scanning electron microscope-energy dispersive spectroscopy (SEM-EDS), and as a result, it could be confirmed that unoxidized copper nanowire was prepared. X-ray diffraction (XRD) patterns of the prepared copper nanowire were shown in FIG. 7. In these patterns, unique X-ray peaks of copper could be confirmed.

### Example 4: Silver coating of copper nanowire using hexamethylenediamine (C₆H₁₆N₂)

A silver-coated copper nanowire was prepared in the same manner as in Example 2 except that the copper nanowire prepared in Example 3 was used for silver coating, and 2.07 ml (0.075 M) of hexamethylenediamine (Sigma Aldrich) and 0.3 g of silver nitrate (AgNO₃, JUNETECH) were used as the silver capping agent.

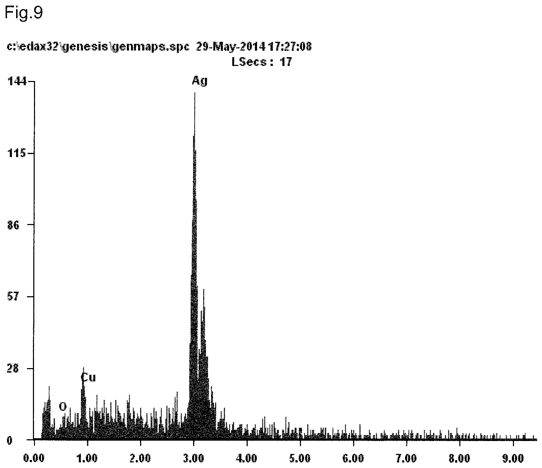

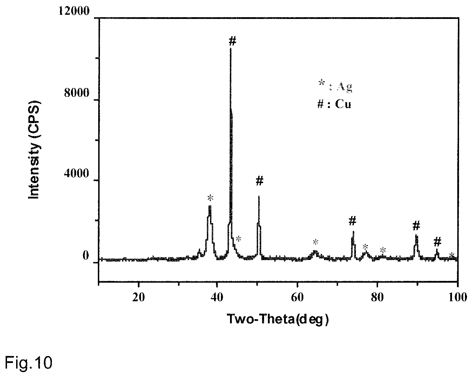

As shown in FIG. 8, it could be confirmed that the silver coating was formed on a surface of the copper nanowire by scanning electron microscope (SEM). In FIG. 9, analysis results of the SEM-EDS of the prepared silver-coated copper nanowire could be confirmed. X-ray diffraction (XRD; RIGAKU, D/MAX-2500) patterns of the prepared silver-coated copper nanowire were shown in FIG. 10. In these patterns, unique peaks of silver and copper could be confirmed.

### Example 5: Oxidation stability of silver-coated copper nanowire

200 ml of water (ultrapure water) and 0.5 g of the silver-coated copper nanowire prepared in Example 2 were added to a 500 ml Erlenmeyer flask, and placed in an ultrasonic cleaner (Youngjin corporation bath sonicator, SK7210HP), and treated at 53 kHz for 10 minutes. A membrane filter (ANODISCTM membrane filter, WHATMAN) having a pore size of 0.2 µm and a diameter of 47 mm was mounted on a vacuum filtration apparatus (WHEATON), and then the silver-coated copper nanowire passed through the vacuum filtration apparatus to form a film. The film-shaped specimen was washed three times with 500 ml of water, dried at room temperature for 24 hours, and then sheet resistance depending on time was measured and shown in FIG. 11(a). The thermogravimetric analysis graph was shown in FIG. 12(a) to observe the weight change depending on an increase in temperature.

### Example 6: Comparison of oxidation stability between copper nanowire and silver-coated copper nanowire

A film was prepared in the same manner as in Example 5 except that the copper nanowire prepared in Example 1 was used, and the sheet resistance of the film was measured. The sheet resistance depending on the time when the film was allowed to stand in air was shown in FIG. 11(b), and the weight change when the temperature was raised was shown in FIG. 12(b).

FIG. 11 shows comparison between the sheet resistance (a) of the silver-coated copper nanowire prepared in Example 2 and the sheet resistance (b) of the non-coated copper nanowire prepared in Example 1.

The sheet resistance (2.7 x 10⁻² Ω/□) of the silver-coated copper nanowire and an initial sheet resistance (7.2 x 10⁻² Ω/□) of the non-coated copper nanowire were almost the same. However, when the nanowires were allowed to stand in air for 1 day, the sheet resistance of the silver-coated copper nanowire was almost the same as the initial sheet resistance (2.2 x 10⁻² Ω/□), but the sheet resistance of the non-coated copper nanowire was increased by two orders as compared to the initial sheet resistance. When the nanowires were allowed to stand for 2 days, it could be confirmed that the silver-coated copper nanowire was almost unchanged, but the sheet resistance of the non-coated copper nanowire was increased by 4 orders. It could be appreciated from FIG. 11 that the non-coated copper nanowire had rapidly increased sheet resistance while forming copper oxide on the surface in air. However, the silver-coated copper nanowire was prevented from being oxidized by the coated silver, such that the sheet resistance thereof was hardly changed when the silver-coated copper nanowire was allowed to stand in air.

As shown in FIG. 12, when the temperature was raised, a weight of the copper nanowire that was not coated according to Example 1 began to increase at 180°C, and increased by 24.4% at the maximum when the temperature was 400°C (b). It indicates that copper was coupled with oxygen to form copper oxide. However, the coated copper nanowire of Example 2 was prevented from being oxidized by the silver coating, and an increase in weight was 0% with regard to the total temperature change (a).

It could be appreciated from the sheet resistance analysis and the thermogravimetric analysis as described that the copper nanowire was prevented from being oxidized by the silver coating.

### Comparative Example 1: Preparation of copper nanowire depending on change in concentration of hydrazine which is reducing agent

The experiment was conducted under the same conditions as in Example 3 except that 4 ml of hydrazine was dissolved in 60 ml (1.33 M) of the aqueous solution.

In Example 3, the concentration of hydrazine which is the reducing agent, was 0.33 M. However, in Comparative Example 2, the concentration was 1.33 M, which was higher than that of Example 3. As shown from the SEM image of FIG. 13, it could be confirmed that the copper was not formed in the nanowire but formed in the form of particles.

### Comparative Example 2: Preparation of copper nanowire depending on change in temperature of reduction reaction

The experiment was conducted under the same conditions as in Example 3 except that the temperature inside the reactor was maintained at 35°C in the reduction reaction by addition of the hydrazine. As shown from the SEM image of FIG. 14, it could be confirmed that the copper nanowire was not formed, but the copper was formed in the form of particles.

### INDUSTRIAL APPLICABILITY

The silver-coated copper nanowire according to the present invention is prevented from being oxidized in air or even at high temperatures, such that electrical conductivity is not deteriorated. Therefore, the silver-coated copper nanowire is useful for preparing an electromagnetic wave shielding paste or a high conductivity paste that requires high electrical conductivity.

## Claims

1. A method of preparing silver-coated copper nanowire comprising:
a. stirring an aqueous solution in which ① sodium hydroxide, ② a copper compound, and at least one material selected from ③ piperazine (C₄H₁₀N₂) and hexamethylenediamine (C₆H₁₆N₂) are added into water to have a concentration 0.008 to 2.0M;
b. preparing a copper nanowire by adding a reducing agent to the aqueous solution and reducing copper ions to have a concentration of 0.01 to 1.0M at temperature of 40 to 100°C;
c. washing and drying the copper nanowire prepared in the step b; and
d. coating a silver on the copper nanowire dried in the step c,
wherein the silver-coated copper nanowire has a length of 5 to 10 µm, a diameter of 200 to 300 nm, and a silver content of 5 to 90 part by weight based on 100 parts by weight of the total nanowire.

2. The method of preparing silver-coated copper nanowire of claim 1, wherein the sodium hydroxide in the step a. is added to have a concentration of 2.5 to 25M.

3. The method of preparing silver-coated copper nanowire of claim 1, wherein the copper compound is at least one selected from copper nitrate, copper sulfate, copper sulfite, copper acetate, copper chloride, copper bromide, copper iodide, copper phosphate or copper carbonate.

4. The method of preparing silver-coated copper nanowire of claim 1, wherein the copper compound of the step a. is added to have a concentration of 0.004 to 0.5 M based on the copper ions.

5. The method of preparing silver-coated copper nanowire of claim 1, wherein the reducing agent in the step b. is at least one selected from hydrazine, ascorbic acid, L(+)-ascorbic acid, isoascorbic acid, ascorbic acid derivative, oxalic acid, formic acid, phosphite, phosphoric acid, sulfite or sodium borohydride.

6. The method of preparing silver-coated copper nanowire of claim 1, wherein the copper nanowire is washed using a hydrazine solution in the step c.

7. The method of preparing silver-coated copper nanowire of claim 1, wherein the step d. comprises:
dispersing the copper nanowire washed and dried in the step c. in an aqueous solution, adding an ammonia-silver complex solution containing a silver capping agent and stirring under a predetermined condition.

8. The method of preparing silver-coated copper nanowire of claim 7, wherein the silver capping agent is at least one selected from piperazine, hexamethylenediamine, ethylenediamine, triethylenediamine, propane-1,3-diamine, butane-1,4-diamine, pentane-1,5-diamine, N,N,N',N'-tetramethylethylenediamine, N,N-diethylethylenediamine, N,N,N'-trimethyl-1,3-propanediamine, N,N-dimethyl-N'-ethylethylenediamine, N-propyl-1,3-propanediamine, N2,N2-dimethyl-1,2-butanediamine, N-butylethylenediamine, N-isopropyl-1,3-propanediamine, polyethylglycol diamine, 1,3-cyclohexanediamine, N-methyl-N'-cyclopropyl ethylenediamine, N,N'-dimethylethylenediamine, N-ethylethylenediamine, N-methylethylenediamine, N,N'-dimethyl-1,6-hexenediamine, N,N,N',N'-tetramethyl-1,4-butanediamine or N-methyl-N'-cyclohexylethylenediamine.

9. The method of preparing silver-coated copper nanowire of claim 7, wherein the silver capping agent is added is to have a concentration 0.01 to 1M in the ammonia-silver complex solution.

10. The method of preparing silver-coated copper nanowire of claim 7, wherein the ammonia-silver complex solution is prepared by adding ammonia water to a silver nitrate solution.

11. The method of preparing silver-coated copper nanowire of claim 10, wherein a concentration of the silver nitrate solution is 0.006 to 0.06M in the ammonia-silver complex solution.

12. The method of preparing silver-coated copper nanowire of claim 10, wherein a concentration of the ammonia water is 0.01 to 0.3M.

## Patentansprüche

1. Verfahren zur Herstellung eines silberbeschichteten Kupfernanodrahtes, umfassend:
a. Rühren einer wässrigen Lösung, in der ① Natriumhydroxid, ② eine Kupferverbindung und wenigstens ein Material, ausgewählt aus ③ Piperazin (C₄H₁₀N₂) und Hexamethylendiamin (C₆H₁₆N₂), in Wasser gegeben werden, sodass sie eine Konzentration von 0,008 bis 2,0M aufweisen;
b. Herstellen eines Kupfernanodrahtes durch Zugeben eines Reduktionsmittels zu der wässrigen Lösung und Reduzieren von Kupferionen, sodass sie eine Konzentration von 0,01 bis 1,0M aufweisen, bei einer Temperatur von 40 bis 100°C;
c. Waschen und Trocknen des im Schritt b. hergestellten Kupfernanodrahtes; und
d. Aufbringen von Silber auf den im Schritt c. getrockneten Kupfernanodraht,
wobei der silberbeschichtete Kupfernanodraht eine Länge von 5 bis 10 µm, einen Durchmesser von 200 bis 300 nm und einen Silbergehalt von 5 bis 90 Gewichtsteilen, basierend auf 100 Gewichtsteilen des gesamten Nanodrahtes, aufweist.

2. Verfahren zur Herstellung eines silberbeschichteten Kupfernanodrahtes nach Anspruch 1, wobei das Natriumhydroxid im Schritt a. zugegeben wird, sodass es eine Konzentration von 2,5 bis 25M aufweist.

3. Verfahren zur Herstellung eines silberbeschichteten Kupfernanodrahtes nach Anspruch 1, wobei die Kupferverbindung wenigstens eine, ausgewählt aus Kupfernitrat, Kupfersulfat, Kupfersulfit, Kupferacetat, Kupferchlorid, Kupferbromid, Kupferiodid, Kupferphosphat oder Kupfercarbonat, ist.

4. Verfahren zur Herstellung eines silberbeschichteten Kupfernanodrahtes nach Anspruch 1, wobei die Kupferverbindung des Schritts a. zugegeben wird, sodass sie eine Konzentration von 0,004 bis 0,5M, basierend auf den Kupferionen, aufweist.

5. Verfahren zur Herstellung eines silberbeschichteten Kupfernanodrahtes nach Anspruch 1, wobei das Reduktionsmittel im Schritt b. wenigstens eines, ausgewählt aus Hydrazin, Ascorbinsäure, L(+)-Ascorbinsäure, Isoascorbinsäure, Ascorbinsäurederivat, Oxalsäure, Ameisensäure, Phosphit, Phosphorsäure, Sulfit oder Natriumborhydrid, ist.

6. Verfahren zur Herstellung eines silberbeschichteten Kupfernanodrahtes nach Anspruch 1, wobei der Kupfernanodraht im Schritt c. unter Verwendung einer Hydrazinlösung gewaschen wird.

7. Verfahren zur Herstellung eines silberbeschichteten Kupfernanodrahtes nach Anspruch 1, wobei der Schritt d. umfasst:
Dispergieren des im Schritt c. gewaschenen und getrockneten Kupfernanodrahtes in einer wässrigen Lösung, Zugeben einer Ammoniak-Silber-Komplexlösung, die ein Silberabdeckmittel enthält, und Rühren unter einer vorbestimmten Bedingung.

8. Verfahren zur Herstellung eines silberbeschichteten Kupfernanodrahtes nach Anspruch 7, wobei das Silberabdeckmittel wenigstens eines, ausgewählt aus Piperazin, Hexamethylendiamin, Ethylendiamin, Triethylendiamin, Propan-1,3-diamin, Butan-1,4-diamin, Pentan-1,5-diamin, N,N,N',N'-Tetramethylethylendiamin, N,N-Diethylethylendiamin, N,N,N'-Trimethyl-1,3-propandiamin, N,N-Dimethyl-N'-ethylethylendiamin, N-Propyl-1,3-propandiamin, N2,N2-Dimethyl-1,2-butandiamin, N-Butylethylendiamin, N-Isopropyl-1,3-propandiamin, Polyethylglykoldiamin, 1,3-Cyclohexandiamin, N-Methyl-N'-cyclopropy-lethylendiamin, N,N'-Dimethylethylendiamin, N-Ethylethylendiamin, N-Methylethylendiamin, N,N'-Dimethyl-1,6-hexendiamin, N,N,N',N'-Tetramethyl-1,4-butandiamin oder N-Methyl-N'-cyclohexylethylendiamin, ist.

9. Verfahren zur Herstellung eines silberbeschichteten Kupfernanodrahtes nach Anspruch 7, wobei das Silberabdeckmittel zu der Ammoniak-Silber-Komplexlösung zugegeben wird, sodass es eine Konzentration von 0,01 bis 1M aufweist.

10. Verfahren zur Herstellung eines silberbeschichteten Kupfernanodrahtes nach Anspruch 7, wobei die Ammoniak-Silber-Komplexlösung durch Zugeben von Ammoniakwasser zu einer Silbernitratlösung hergestellt wird.

11. Verfahren zur Herstellung eines silberbeschichteten Kupfernanodrahtes nach Anspruch 10, wobei eine Konzentration der Silbernitratlösung in der Ammoniak-Silber-Komplexlösung 0,006 bis 0,06M beträgt.

12. Verfahren zur Herstellung eines silberbeschichteten Kupfernanodrahtes nach Anspruch 10, wobei eine Konzentration des Ammoniakwassers 0,01 bis 0,3M beträgt.

## Revendications

1. Procédé de préparation de nanofil de cuivre revêtu d'argent comprenant :
a. l'agitation d'une solution aqueuse dans laquelle ① de l'hydroxyde de sodium, ② un composé de cuivre, et au moins un matériau sélectionné à partir de la ③ pipérazine (C₄H₁₀N₂) et de l'hexaméthylènediamine (C₆H₁₆N₂), sont ajoutés dans l'eau pour avoir une concentration de 0,008 à 2 M ;
b. la préparation d'un nanofil de cuivre en ajoutant un agent réducteur à la solution aqueuse et en réduisant des ions de cuivre pour avoir une concentration de 0,01 à 1,0 M à une température de 40 à 100 °C ;
c. le lavage et le séchage du nanofil de cuivre préparé dans l'étape b ; et
d. l'application d'un argent sur le nanofil de cuivre séché dans l'étape c,
dans lequel le nanofil de cuivre revêtu d'argent présente une longueur de 5 à 10 µm, un diamètre de 200 à 300 nm et une teneur en argent de 5 à 90 parties en poids sur la base de 100 parties en poids du nanofil total.

2. Procédé de préparation de nanofil de cuivre revêtu d'argent selon la revendication 1, dans lequel l'hydroxyde de sodium de l'étape a. est ajouté pour avoir une concentration de 2,5 à 25 M.

3. Procédé de préparation de nanofil de cuivre revêtu d'argent selon la revendication 1, dans lequel le composé de cuivre est au moins l'un sélectionnés à partir du nitrate de cuivre, du sulfate de cuivre, du sulphite de cuivre, de l'acétate de cuivre, du chlorure cuivrique, du bromure de cuivre, de l'iodure de cuivre, du phosphate de cuivre ou du carbonate de cuivre.

4. Procédé de préparation de nanofil de cuivre revêtu d'argent selon la revendication 1, dans lequel le composé de cuivre de l'étape a. est ajouté pour avoir une concentration de 0,004 à 0,5 M sur la base des ions de cuivre.

5. Procédé de préparation de nanofil de cuivre revêtu d'argent selon la revendication 1, dans lequel l'agent réducteur de l'étape b. est au moins l'un sélectionnés à partir de l'hydrazine, de l'acide ascorbique, de l'acide L(+)-ascorbique, de l'acide isoascorbique, du dérivé d'acide ascorbique, de l'acide oxalique, de l'acide formique, du phosphite, de l'acide phosphorique, du sulphite ou du borohydrure de sodium.

6. Procédé de préparation de nanofil de cuivre revêtu d'argent selon la revendication 1, dans lequel le nanofil de cuivre est lavé à l'aide d'une solution d'hydrazine dans l'étape c.

7. Procédé de préparation de nanofil de cuivre revêtu d'argent selon la revendication 1, dans lequel l'étape d. comprend : la dispersion du nanofil de cuivre lavé et séché dans l'étape c. dans une solution aqueuse, l'ajout d'une solution de complexe ammoniac-argent contenant un agent de recouvrement d'argent et l'agitation dans une condition prédéterminée.

8. Procédé de préparation de nanofil de cuivre revêtu d'argent selon la revendication 7, dans lequel l'agent de recouvrement d'argent est au moins l'un sélectionné à partir de la pipérazine, de l'hexaméthylènediamine, de l'éthylènediamine, du triéthylènediamine, du 1-3 diaminopropane, du 1,4-diaminobutane, du 1,5-diaminopentane, du N,N,N',N' tetraméthyléthylènediamine, du N,N-diéthyléthylènediamine, du N,N,N'-triméthyle-1,3-diaminopropane, du N,N-diméthyle-N'-éthyléthylènediamine, du N-propyle-1,3-diaminopropane, du N2,N2-diméthyle-1,2-diaminobutane, du N-butyléthylènediamine, du N-isopropyle-1,3-diaminopropane, du diamine de polyéthylglycol, du 1,3-cyclohexanediamine, du N-méthyle-N'-cyclopropyle éthylènediamine, du N,N'-diméthyléthylènediamine, du N-éthyléthylènediamine, du N-méthyléthylènediamine, du N,N'-diméthyle-1,6-hexènediamine, du N,N,N',N'-tetraméthyle-1,4-diaminobutane ou du N-méthyle-N'-cyclohexyléthylènediamine.

9. Procédé de préparation de nanofil de cuivre revêtu d'argent selon la revendication 7, dans lequel l'agent de recouvrement d'argent est ajouté pour avoir une concentration de 0,01 à 1 M dans la solution de complexe ammoniac-argent.

10. Procédé de préparation de nanofil de cuivre revêtu d'argent selon la revendication 7, dans lequel la solution de complexe ammoniac-argent est préparée en ajoutant de l'eau ammoniaquée à une solution de nitrate d'argent.

11. Procédé de préparation de nanofil de cuivre revêtu d'argent selon la revendication 10, dans lequel une concentration de la solution de nitrate d'argent s'étend de 0,006 à 0,06 M dans la solution de complexe ammoniac-argent.

12. Procédé de préparation de nanofil de cuivre revêtu d'argent selon la revendication 10, dans lequel une concentration de l'ammoniac s'étend de 0,01 à 0,3 M.
